# EUROPÄISCHE PATENTANMELDUNG

(11) **EP 2 610 034 A2**
(43) Veröffentlichungstag der Anmeldung: **03.07.2013**
(21) Anmeldenummer: 12195629.6
(22) Anmeldetag: 05.12.2012
(51) Int. Cl.: B25B 23/06

(54) **Vereinzelereinheit**

(30) Priorität: 27.12.2011 DE 102011089952
(71) Anmelder: EJOT Baubefestigungen GmbH, 57334 Bad Laasphe (DE)
(72) Erfinder: Braach, Stefan, 57334 Bad Laasphe (DE)
(74) Vertreter: Hohgardt, Martin

(57) **Zusammenfassung**

Vereinzelereinheit (1), insbesondere für ein Stand-Up-Tool, zur Überführung von aufmagazinierten Befestigungsmitteln (3) vom magazinierten Zustand in einen vereinzelten Zustand, aufweisend ein Mitnehmerelement (2) mit zumindest einem Aufnahmeraum (2a) für einen Kopf (3a) eines Befestigungsmittels (3) sowie einem Antriebsabschnitt (2b), wobei durch eine Betätigung des Antriebsabschnitts (2b) das Mitnehmerelement (2) eine Rotationsbewegung ausführt, bei der das jeweils vom magazinierten Zustand im Aufnahmeraum (2a) des Mitnehmerelements (2) aufgenommene Befestigungsmittel (3) in den vereinzelten Zustand gebracht wird.

## Beschreibung

Die vorliegende Erfindung betrifft eine Vereinzelereinheit, insbesondere für ein Stand-Up-Tool, mittels welcher aufmagazinierte Befestigungsmittel, insbesondere Schrauben (mit und ohne Dichtscheibe), vom magazinierten Zustand in den vereinzelten Zustand überführt werden, so dass die vereinzelten Schrauben über einen nachgeschalteten Transportweg einer Haltebackenanordnung des Stand-Up-Tools zugeführt werden können.

Aus der DE 42 19 095 C1 ist eine Vorschubeinrichtung an einem Eintreibwerkzeug zum Zuführen von Befestigungsmitteln, insbesondere Schrauben, die in einem bestimmten Abstand voneinander an einem Vorratsstreifen befestigt sind, bekannt. Die Vorschubeinrichtung umfasst einen am Eintreibwerkzeug befestigten Längsführungsteil, in welchem eine Leiste mit einer Steuernut für ein als Steuerzapfen ausgebildetes Betätigungsglied eines Schrittschaltwerkes angeordnet ist. Die Steuernut weist einen Steuerabschnitt auf, der schräg zur Längsrichtung des Längsführungsteiles verläuft. Die Vorschubeinrichtung umfasst des Weiteren ein in dem Längsführungsteil längsverschiebbar geführtes Mundstück, welches entgegen der Eintreibrichtung der Befestigungsmittel gegen Federkraft verschiebbar ist, welches einen Ausstoßkanal für einen Eintreibdorn aufweist, welches mit einem seitlich in diesen Ausstoßkanal mündenden Zuführungskanal für den Vorratsstreifen versehen ist und welches das Schrittschaltwerk lagert. Das Schrittschaltwerk ist mit einem Vorschubglied in Form eines drehbaren Sprossenrades ausgebildet, dessen Sprossen in Randausnehmungen des Vorratsstreifens eingreifen. In dem Mundstück ist ein Schwenkhebel gelagert, an dessen dem Vorratsstreifen zugewandten Ende das Sprossenrad angelenkt ist und an dessen anderem Ende der Steuerzapfen angeordnet ist. Der Schwenkhebel ist dabei als zweiarmiger Hebel ausgebildet. Zudem ist eine Sperre vorgesehen, welche das Sprossenrad während des Transportes des Vorratsstreifens in die Eintreibstellung der Schraube arretiert.

Es ist die Aufgabe der vorliegenden Erfindung, eine technisch einfachere und zuverlässigere Lösung zur Vereinzelung von aufmagazinierten Befestigungselementen zu schaffen.

Diese Aufgabe wird erfindungsgemäß gelöst durch eine Vereinzelereinheit, insbesondere für ein Stand-Up-Tool, zur Überführung von aufmagazinierten Befestigungsmitteln vom magazinierten Zustand in einen vereinzelten Zustand, welche ein Mitnehmerelement aufweist, wobei das Mitnehmerelement zumindest einen Aufnahmeraum für einen Kopf eines Befestigungsmittels sowie einen Antriebsabschnitt umfasst. Durch eine Betätigung des Antriebsabschnitts führt das Mitnehmerelement eine Rotationsbewegung aus, bei der das jeweils vom magazinierten Zustand im Aufnahmeraum des Mitnehmerelements aufgenommene Befestigungsmittel in den vereinzelten Zustand gebracht wird.

In einer bevorzugten Ausführungsform der vorliegenden Erfindung umfasst die Rotationsbewegung eine Drehung des Mitnehmerelements um etwa 180°. Auf diese Weise wird sichergestellt, dass das Befestigungsmittel aufgrund der Schwerkraft vollständig aus dem Aufnahmeraum des Mitnehmerelements heraus gleiten kann, d.h. ohne im Aufnahmeraum hängen zu bleiben. Hierzu muss die Rotationsbewegung des Mitnehmerelements nicht exakt 180° betragen, auch bei geringfügigen Abweichungen wird in der Regel noch eine störungsfreie Vereinzelung möglich sein.

In einer weiteren bevorzugten Ausführungsform der vorliegenden Erfindung ist das Mitnehmerelement als im Wesentlichen zylinderförmige Buchse ausgestaltet. Die im Wesentlichen zylindrische Ausgestaltung des Mitnehmerelements hat sich für die räumliche Anordnung innerhalb des Stand-Up-Tools als günstig erwiesen. Allerdings sind auch im Wesentlichen mehreckige Ausgestaltungen des Mitnehmerelements denkbar.

In einer anderen bevorzugten Ausführungsform der vorliegenden Erfindung entspricht der Aufnahmeraum in seiner Breite zumindest dem Eckmaß des Befestigungsmittelkopfs oder dem Außendurchmesser einer daran angepressten Scheibe. In der Praxis wird der Aufnahmeraum in seiner Breite geringfügig größer sein als das Eckmaß des Befestigungsmittelkopfs bzw. als der Außendurchmesser einer daran angepressten Scheibe, um ein Verkeilen des Befestigungsmittelkopfs im Aufnahmeraum zu verhindern.

In einer wiederum anderen bevorzugten Ausführungsform der vorliegenden Erfindung weist das Mitnehmerelement an seiner Stirnseite eine U-förmige Aussparung auf, an welche sich der Aufnahmeraum direkt anschließt. Die Breite der U-förmigen Aussparung entspricht dabei zumindest dem Außendurchmesser eines Befestigungsmittelschafts. Sie dient zur Führung des Befestigungsmittels und soll zudem ein Herauskippen des Befestigungsmittels aus dem Aufnahmeraum des Mitnehmerelements verhindern. Dies ist insbesondere bei der Verwendung von Befestigungsmitteln mit auf den Schaft aufgebrachten Dichtscheiben von Bedeutung. Als Befestigungsmittel kommen grundsätzlich Schrauben, Nägel, Nieten oder dergleichen in Betracht.

In einer noch weiteren bevorzugten Ausführungsform der vorliegenden Erfindung werden die Befestigungsmittel im magazinierten Zustand vermittels eines in einen oberen Abschnitt einer korrespondierenden Führungsvorrichtung eingesetzten Magazinstreifens zum Mitnehmerelement geführt. Der Magazinstreifen und der obere Abschnitt der Führungsvorrichtung wirken dabei derart zusammen, dass die Befestigungsmittel kontinuierlich bis in den Aufnahmeraum des Mitnehmerelements bzw. die U-förmige Aussparung geführt bleiben. An dem oberen Abschnitt der Führungsvorrichtung können ggf. Mittel zum Lösen einer korrespondierenden Herausfallsperre des Magazinstreifens angeordnet sein. Der Magazinstreifen kann allerdings auf jede beliebige Weise mit der Führungsvorrichtung gekoppelt sein, welche einen störungsfreien Übergang der Befestigungsmittel vom Magazinstreifen in die Führungsvorrichtung gewährleistet.

In einer anderen bevorzugten Ausführungsform der vorliegenden Erfindung werden die Befestigungsmittel im vereinzelten Zustand von einem unteren Abschnitt der Führungsvorrichtung vom betätigten Mitnehmerelement zu einer Haltebackenanordnung geführt. Die U-förmige Aussparung, der untere Abschnitt der Führungsvorrichtung und die Haltebackenanordnung wirken dabei derart zusammen, dass die Befestigungsmittel kontinuierlich bis in die Haltebackenanordnung hinein geführt bleiben.

In einer noch anderen bevorzugten Ausführungsform der vorliegenden Erfindung ist der Antriebsabschnitt des Mitnehmerelements zahnradartig ausgebildet. Die zahnradartige Ausbildung des Antriebsabschnitts des Mitnehmerelements ermöglicht eine besonders effektive und wenig störungsanfällige Betätigung desselben. Es sind jedoch auch anderweitige Ausgestaltungen des Antriebsabschnitts denkbar, wie etwa eine Nut zur Aufnahme eines Antriebsriemens, magnetische Mittel oder eine Art Kurbelwelle.

In einer wiederum anderen bevorzugten Ausführungsform der vorliegenden Erfindung wird der Antriebsabschnitt des Mitnehmerelements über einen Linearantrieb betätigt. Der Linearantrieb umfasst dabei regelmäßig eine Zahnstange. Allerdings sind, wie vorstehend angedeutet, auch andere Formen des Antriebs denkbar. Der Linearantrieb wird im Übrigen durch eine Hubbewegung einer Bedienperson auf und ab bewegt.

In einer noch weiteren bevorzugten Ausführungsform der vorliegenden Erfindung umfasst die Führungsvorrichtung eine gebogene Zuführbahn. Diese geometrische Ausgestaltung (insbesondere des unteren Abschnitts der Führungsvorrichtung hat sich als besonders günstig für den Transport der Befestigungsmittel und deren Übergabe in die Haltebackenanordnung erwiesen.

In einer noch weiteren bevorzugten Ausführungsform der vorliegenden Erfindung wird die gebogene Zuführbahn von einem Steg geteilt. Der Steg ist in der Regel so ausgestaltet, dass er zwischen Befestigungsmittelkopf und Dichtscheibe bzw. zwischen der am Befestigungsmittelkopf angepressten Scheibe und der Dichtscheibe am Befestigungsmittelschaft anliegt. Die U-förmige Aussparung ist im Übrigen so ausgestaltet, dass sie die Führungsfunktion des Stegs sowohl im unbetätigten als auch im betätigen Zustand des Mitnehmerelements übernimmt, d.h. sie fluchtet in diesen beiden Positionen des Mitnehmerelements mit dem Steg. Dabei entspricht die Wandstärke der U-förmigen Aussparung regelmäßig der Dicke des Stegs.

Vorzugsweise ist zwischen dem oberen und dem unteren Abschnitt der Führungsvorrichtung eine Aussparung angeordnet, welche in etwa mit dem Außendurchmesser einer auf einen Befestigungsmittelschaft aufgesetzten Dichtscheibe korrespondiert. Auf diese Weise kann das Mitnehmerelement drehbar innerhalb der Führungsvorrichtung gelagert werden und die U-förmige Aussparung kann den oberen Teil des Stegs mit dem unteren Teil des Stegs verbinden.

Weiter vorzugsweise entspricht der Durchmesser der Stirnseite des Mitnehmerelements in etwa dem Durchmesser einer auf einen Befestigungsmittelschaft aufgesetzten Dichtscheibe. Hierdurch wird eine besonders gute Halterung für das zu vereinzelnde Befestigungsmittel bereitgestellt. Der Durchmesser der Stirnseite des Mitnehmerelements entspricht somit ebenfalls in etwa dem Durchmesser der Aussparung in der Führungsvorrichtung.

Anhand der beigefügten Zeichnungen wird die Überführung eines Befestigungselements vom aufmagazinierten Zustand in den vereinzelten Zustand mittels der erfindungsgemäßen Vereinzelereinheit veranschaulicht. Es zeigen:
- Fig. 1: eine perspektivische Darstellung einer erfindungsgemäßen Vereinzelereinheit im unbetätigten Zustand, wobei noch kein Befestigungsmittel in dem Mitnehmerelement aufgenommen ist;
- Fig. 2: eine perspektivische Darstellung einer erfindungsgemäßen Vereinzelereinheit im unbetätigten Zustand mit einem in dem Mitnehmerelement aufgenommenen Befestigungsmittel;
- Fig. 3: eine perspektivische Darstellung einer erfindungsgemäßen Vereinzelereinheit mit einem in dem Mitnehmerelement aufgenommenen Befestigungsmittel in einer Zwischenstellung des Mitnehmerelements;
- Fig. 4: eine perspektivische Darstellung einer erfindungsgemäßen Vereinzelereinheit mit dem Mitnehmerelement im vollständig betätigten Zustand vor dem Herausgleiten des Befestigungsmittels;
- Fig. 5: eine perspektivische Darstellung einer erfindungsgemäßen Vereinzelereinheit mit dem Mitnehmerelement im vollständig betätigten Zustand beim Herausgleiten des Befestigungsmittels;
- Fig. 6: eine perspektivische Darstellung einer erfindungsgemäßen Vereinzelereinheit mit dem Mitnehmerelement im betätigten Zustand, wobei das Befestigungsmittel weiter zur Haltebackenanordnung transportiert wird.

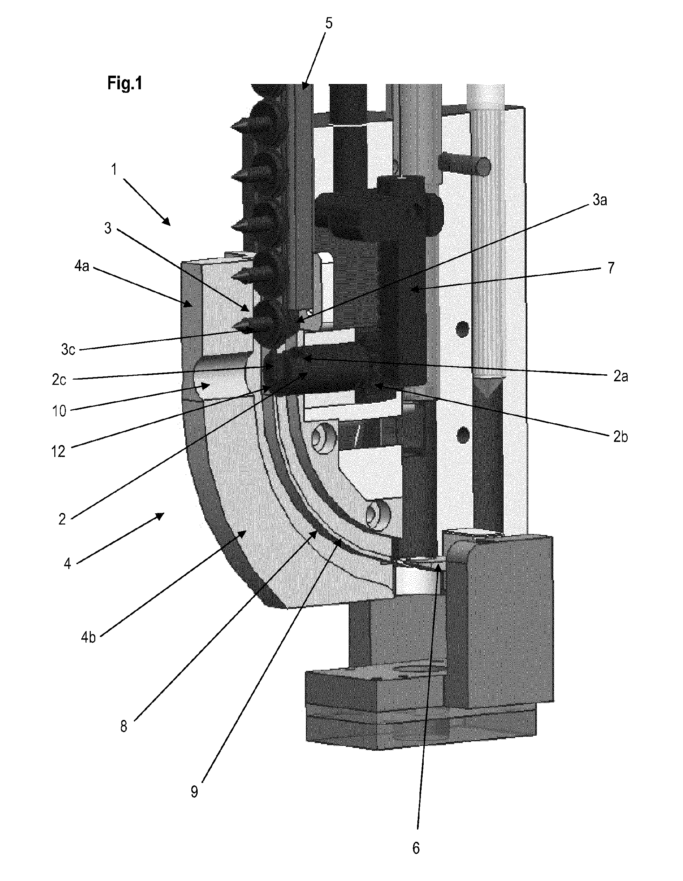

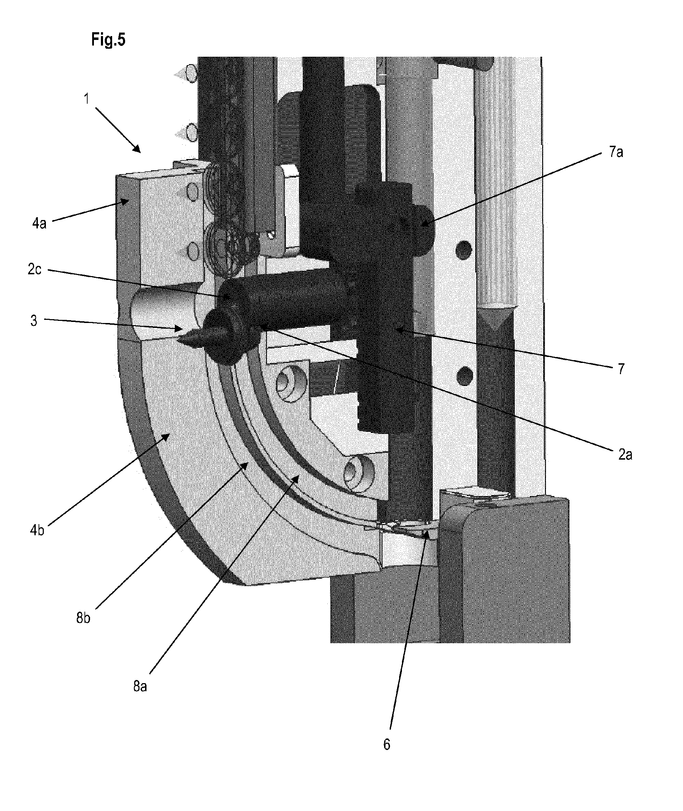

In **Fig. 1** wird eine erfindungsgemäße Vereinzelereinheit 1 für ein Stand-Up-Tool im unbetätigten Zustand dargestellt. Die Vereinzelereinheit 1 dient zur Überführung der aufmagazinierten Befestigungsmittel vom gezeigten magazinierten Zustand in den vereinzelten Zustand (vgl. etwa **Fig. 5**). Die Vereinzelereinheit 1 weist ein Mitnehmerelement 2 auf, welches einen Aufnahmeraum 2a für einen Kopf 3a eines Befestigungsmittels 3 umfasst sowie einen Antriebsabschnitt 2b. Das Mitnehmerelement 2 weist zudem an seiner Stirnseite 12 eine U-förmige Aussparung 2c auf. Die Breite der U-förmigen Aussparung 2c entspricht zumindest dem Außendurchmesser eines Befestigungsmittelschafts 3c. Direkt hinter der U-förmigen Aussparung 2c schließt sich der Aufnahmeraum 2a des Mitnehmerelements 2 an. Das Mitnehmerelement 2 ist als im Wesentlichen zylinderförmige Buchse ausgestaltet. Der Antriebsabschnitt 2b des Mitnehmerelements 2 ist zahnradartig ausgebildet. Der Antriebsabschnitt 2b steht in Eingriff mit einem Linearantrieb 7, welcher vorliegend in Form einer Zahnstange ausgestaltet ist. Wie zu sehen, werden die Befestigungsmittel 3 im magazinierten Zustand vermittels eines in einen oberen Abschnitt 4a einer korrespondierenden Führungsvorrichtung 4 (nur eine Hälfte gezeigt) eingesetzten Magazinstreifens 5 zum Mitnehmerelement 2 geführt. Im vereinzelten Zustand (vgl. etwa **Fig. 5**) werden die Befestigungsmittel 3 dann von einem unteren Abschnitt 4b der Führungsvorrichtung 4 zu einer Haltebackenanordnung 6 geführt. Die Führungsvorrichtung 4 umfasst eine gebogene Zuführbahn 8, welche von einem Steg 9 geteilt wird. Des Weiteren ist zwischen dem oberen 4a und dem unteren Abschnitt 4b der Führungsvorrichtung 4 eine zylindrische Aussparung 10 angeordnet, welche in etwa mit dem Außendurchmesser einer auf einen Befestigungsmittelschaft 3c aufgesetzten Dichtscheibe 11 korrespondiert. Der Durchmesser der Stirnseite 12 des Mitnehmerelements 2 entspricht in etwa dem Durchmesser einer auf den Befestigungsmittelschaft 3c aufgesetzten Dichtscheibe 11 und somit wiederum in etwa dem Durchmesser der zylindrischen Aussparung 10.

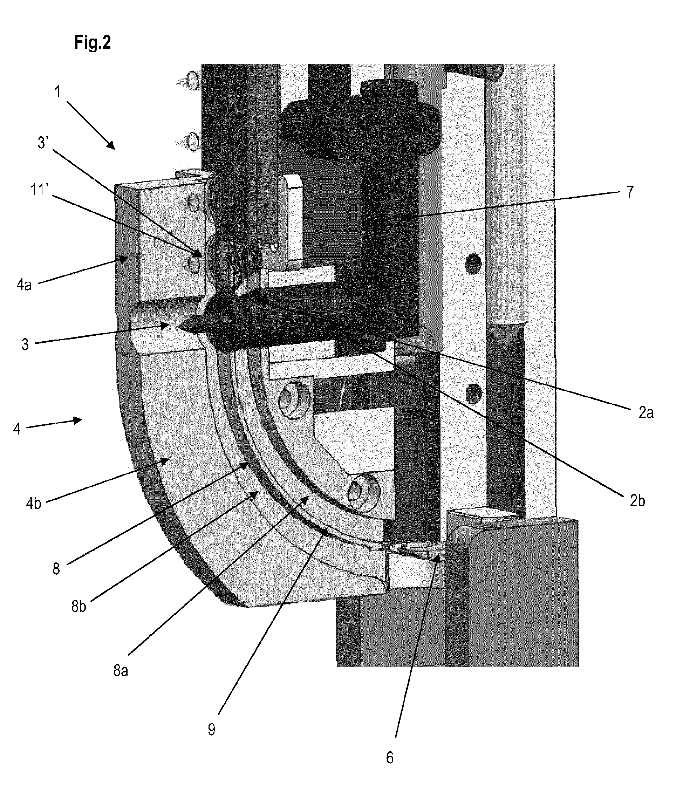

Gemäß der in **Fig. 2** gezeigten Darstellung der erfindungsgemäßen Vereinzelereinheit 1 ist das unterste Befestigungsmittel 3 nun mit seinem Kopf in den Aufnahmeraum 2a des Mitnehmerelements 2 gelangt. Die auf den Schaft 3c des Befestigungsmittels 3 aufgesteckte Dichtscheibe 11 liegt an der Stirnseite 12 des Mitnehmerelements 2 an. Der Magazinstreifen 5 und die Führungsvorrichtung 4 sind derart miteinander gekoppelt, dass das auf das vom Mitnehmerelement 2 aufgenommene Befestigungsmittel 3 folgende Befestigungsmittel 3' bereits vom Steg 9 der Zuführbahn 8 geführt wird. Der Steg 9 teilt die Zuführbahn 8 in eine Befestigungsmittelkopfbahn 8a und eine Dichtscheibenbahn 8b.

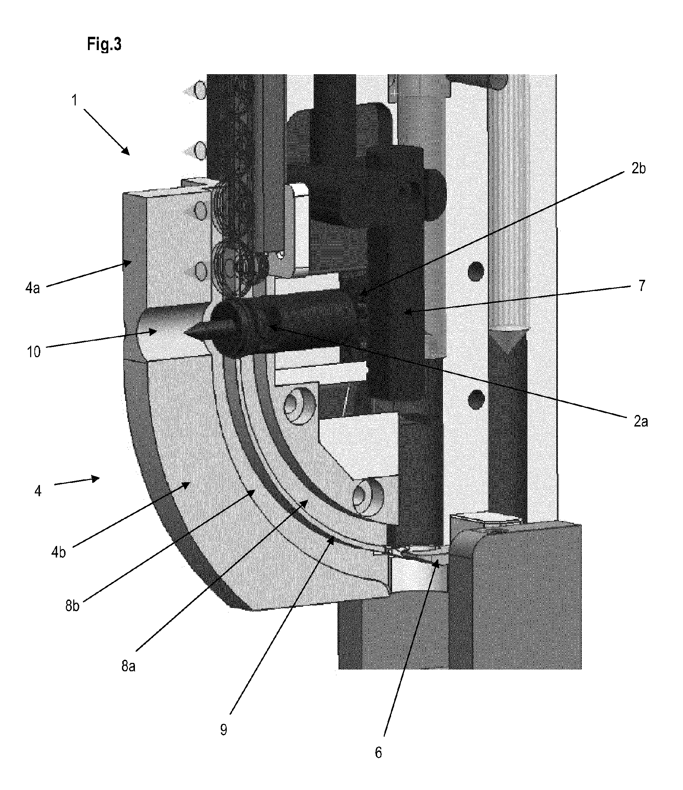

**Fig. 3** zeigt das Mitnehmerelement 2 in einer um 90° gedrehten Stellung während eines Betätigungsvorgangs. Man erkennt den im Aufnahmeraum 2a aufgenommenen Kopf 3a des Befestigungsmittels 3. Der Aufnahmeraum 2a entspricht in seiner Breite zumindest dem Eckmaß des Befestigungsmittelkopfs 3a bzw. dem Außendurchmesser einer daran angepressten Scheibe 3b. Man erkennt, wie der zwischen der Dichtscheibe 11 und dem Befestigungsmittelkopf 3a bzw. der angepressten Scheibe 3b angeordnete Schaftabschnitt des Befestigungsmittels 3 in der U-förmigen Aussparung 2c steckt, welche auf diese Weise den Steg 9 ersetzt. Durch einen Hub einer Bedienperson wurde die Zahnstange 7 nach unten bewegt, wobei sie den zahnradförmigen Antriebsabschnitt 2b des Mitnehmerelements 2 betätigt und so die Rotationsbewegung desselben erzeugt. Die Zahnstange 7 und der Antriebsabschnitt 2b sind dabei so ausgelegt, dass eine Hubbewegung der Zahnstange 7 über ihre gesamte Länge eine 180°-Drehung des Mitnehmerelements bewirkt. In der gezeigten Stellung wurde die Zahnstange 7 in etwa zur Hälfte nach unten bewegt, so dass eine 90°-Drehung des Mitnehmerelements 2 resultiert.

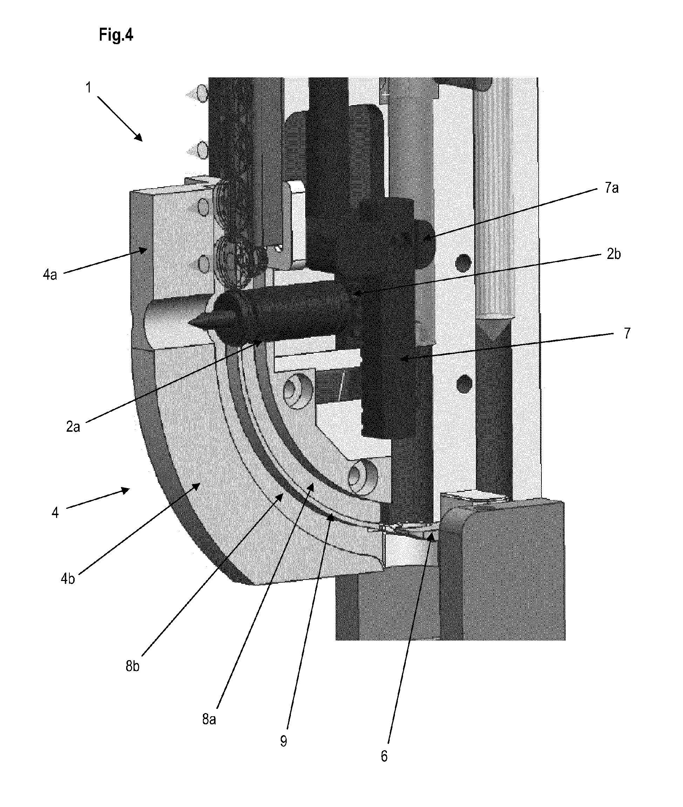

In der Stellung gemäß **Fig. 4** wurde die Zahnstange 7 vollständig nach unten bewegt, so dass das Mitnehmerelement um 180° gedreht wurde. Der Aufnahmeraum 2a zeigt nach unten und die U-förmige Aussparung 2b steht auf dem Kopf. Die Halterung 7a der Zahnstange 7 liegt auf dem zahnradartigen Antriebsabschnitt 2b des Mitnehmerelements 2 auf. Während der Drehung des Mitnehmerelements 2 dreht sich das im Aufnahmeraum 2a befindliche Befestigungsmittel 3 nicht oder nur geringfügig mit.

In **Fig. 5** erkennt man, wie das Befestigungsmittel 3 aus der U-förmigen Aussparung 2c und aus dem Aufnahmeraum 2a des Mitnehmerelements 2 heraus gleitet. Die Dichtscheibe 11 wird dabei von der Dichtscheibenbahn 8b und der Befestigungsmittelkopf 3a wird von der Befestigungsmittelkopfbahn 8a der Zuführbahn 8 aufgenommen.

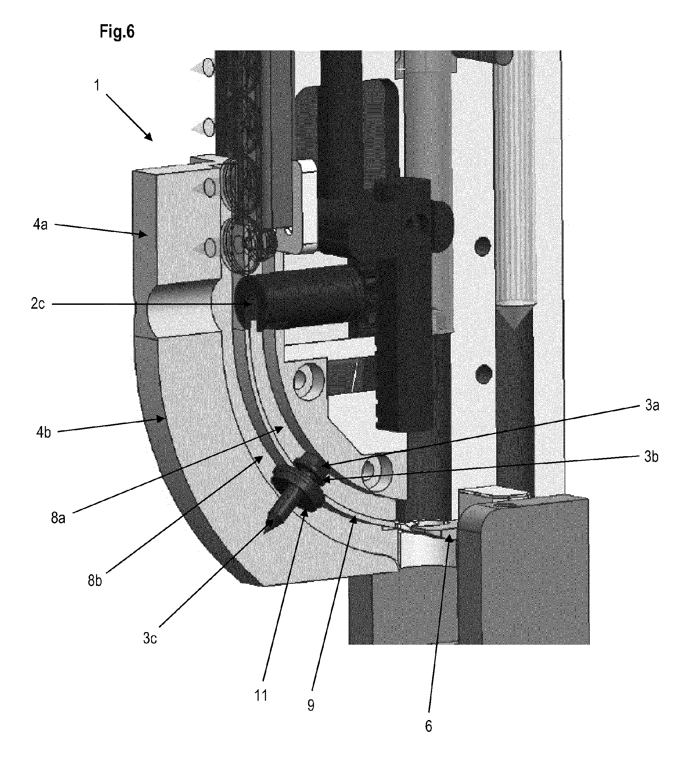

Schließlich wird in **Fig. 6** der Weitertransport des Befestigungsmittels 3 zur Haltebackenanordnung 6 veranschaulicht. Das Befestigungsmittel 3 gleitet in der gebogenen Zuführbahn 8 des unteren Abschnitts 4b der Führungsvorrichtung 4. Dabei liegt der Steg 9 wiederum zwischen der an den Befestigungsmittelkopf 3a angepressten Scheibe 3b auf der einen Seite und der Dichtscheibe 11 auf der anderen Seite am Befestigungsmittelschaft 3c an. Der unterhalb der Dichtscheibe 11 befindliche Teil des Befestigungsmittelschafts 3c gleitet zwischen den beiden Hälften der Führungsvorrichtung 4 hindurch. Man erkennt, dass die auf dem Kopf stehende U-förmige Aussparung 2c bzw. der rechte Schenkel der U-förmigen Aussparung 2c mit dem Steg 9 fluchtet und die gleiche Wandstärke aufweist wie dieser. Eine analoge Anordnung nimmt der linke Schenkel der U-förmigen Aussparung 2c in der Stellung gemäß **Fig. 1** ein.

## Patentansprüche

1. Vereinzelereinheit (1), insbesondere für ein Stand-Up-Tool, zur Überführung von aufmagazinierten Befestigungsmitteln (3) vom magazinierten Zustand in einen vereinzelten Zustand, aufweisend ein Mitnehmerelement (2) mit zumindest einem Aufnahmeraum (2a) für einen Kopf (3a) eines Befestigungsmittels (3) sowie einem Antriebsabschnitt (2b),
**dadurch gekennzeichnet dass**
durch eine Betätigung des Antriebsabschnitts (2b) das Mitnehmerelement (2) eine Rotationsbewegung ausführt, bei der das jeweils vom magazinierten Zustand im Aufnahmeraum (2a) des Mitnehmerelements (2) aufgenommene Befestigungsmittel (3) in den vereinzelten Zustand gebracht wird.

2. Vereinzelereinheit (1) nach Anspruch 1, **dadurch gekennzeichnet, dass** die Rotationsbewegung eine Drehung des Mitnehmerelements (2) um etwa 180° umfasst.

3. Vereinzelereinheit (1) nach einem der vorhergehenden Ansprüche, **dadurch gekennzeichnet, dass** das Mitnehmerelement (2) als im Wesentlichen zylinderförmige Buchse ausgestaltet ist.

4. Vereinzelereinheit (1) nach einem der vorhergehenden Ansprüche, **dadurch gekennzeichnet, dass** der Aufnahmeraum (2a) in seiner Breite zumindest dem Eckmaß des Befestigungsmittelkopfs (3a) oder dem Außendurchmesser einer daran angepressten Scheibe (3b) entspricht.

5. Vereinzelereinheit (1) nach einem der vorhergehenden Ansprüche, **dadurch gekennzeichnet, dass** das Mitnehmerelement (2) an seiner Stirnseite eine U-förmige Aussparung (2c) aufweist.

6. Vereinzelereinheit (1) nach Anspruch 5, **dadurch gekennzeichnet, dass** die Breite der U-förmigen Aussparung (2c) zumindest dem Außendurchmesser eines Befestigungsmittelschafts (3c) entspricht.

7. Vereinzelereinheit (1) nach einem der vorhergehenden Ansprüche, **dadurch gekennzeichnet, dass** die Befestigungsmittel (3) im magazinierten Zustand vermittels eines in einen oberen Abschnitt (4a) einer korrespondierenden Führungsvorrichtung (4) eingesetzten Magazinstreifens (5) zum Mitnehmerelement (2) geführt werden.

8. Vereinzelereinheit (1) nach Anspruch 7, **dadurch gekennzeichnet, dass** die Befestigungsmittel (3) im vereinzelten Zustand von einem unteren Abschnitt (4b) der Führungsvorrichtung (4) vom betätigten Mitnehmerelement (2) zu einer Haltebackenanordnung (6) geführt werden.

9. Vereinzelereinheit (1) nach einem der vorhergehenden Ansprüche, **dadurch gekennzeichnet, dass** der Antriebsabschnitt (2b) des Mitnehmerelements (2) zahnradartig ausgebildet ist.

10. Vereinzelereinheit (1) nach einem der vorhergehenden Ansprüche, **dadurch gekennzeichnet, dass** der Antriebsabschnitt (2b) des Mitnehmerelements (2) über einen Linearantrieb (7) betätigt wird.

11. Vereinzelereinheit (1) nach Anspruch 10, **dadurch gekennzeichnet, dass** der Linearantrieb (7) eine Zahnstange umfasst.

12. Vereinzelereinheit (1) nach einem der vorhergehenden Ansprüche, **dadurch gekennzeichnet, dass** die Führungsvorrichtung (4) eine gebogene Zuführbahn (8) umfasst.

13. Vereinzelereinheit (1) nach Anspruch 12, **dadurch gekennzeichnet, dass** die gebogene Zuführbahn (8) von einem Steg (9) geteilt wird.

14. Vereinzelereinheit (1) nach einem der vorhergehenden Ansprüche, **dadurch gekennzeichnet, dass** zwischen dem oberen (4a) und dem unteren Abschnitt (4b) der Führungsvorrichtung (4) eine Aussparung (10) angeordnet ist, welche in etwa mit dem Außendurchmesser einer auf einen Befestigungsmittelschaft (3c) aufgesetzten Dichtscheibe (11) korrespondiert.

15. Vereinzelereinheit (1) nach einem der vorhergehenden Ansprüche, **dadurch gekennzeichnet, dass** der Durchmesser der Stirnseite (12) des Mitnehmerelements (2) in etwa dem Durchmesser einer auf einen Befestigungsmittelschaft (3c) aufgesetzten Dichtscheibe (11) entspricht.
